# EUROPÄISCHE PATENTANMELDUNG

(11) **EP 2 028 029 A2**
(43) Veröffentlichungstag der Anmeldung: **25.02.2009**
(21) Anmeldenummer: 08160404.3
(22) Anmeldetag: 15.07.2008
(51) Int. Cl.: B60G 21/05

(54) **Als Querträger einer Verbundlenkerachse eines Kraftfahrzeuges einsetzbarer Profilstab**

(30) Priorität: 21.08.2007 DE 102007039352
(71) Anmelder: Benteler Automobiltechnik GmbH, 33102 Paderborn (DE)
(72) Erfinder: Zuber, Armin, Dr., 33175, Bad Lippspringe (DE)
(74) Vertreter: Dantz, Jan Henning

(57) **Zusammenfassung**

Ein als Querträger einer Verbundlenkerachse eines Kraftfahrzeuges einsetzbarer Profilstab (1) mit zwei rohrartigen Enden (3) und einer dazwischen eingeformten doppelwandigen Längsrinne (2), ist so ausgebildet, dass auf der der Längsrinne (2) abgewandten Längsseite zumindest in einem Teilbereich der rohrartigen Enden (3) jeweils mindestens eine Einprägung (5) vorgesehen ist.

## Beschreibung

Die Erfindung betrifft einen als Querträger einer Verbundlenkerachse eines Kraftfahrzeuges einsetzbaren Profilstab entsprechend dem Oberbegriff des Anspruchs 1.

Derartige Profilstäbe sind in ihrer Formgebung so konzipiert, dass sie insbesondere Torsionskräfte aufnehmen, wie sie bei einer wechselseitigen Belastung einer Radaufhängung eines Kraftfahrzeuges entstehen. Gleichzeitig soll der in diesem Sinne als Querträger der Verbundlenkerhinterachse eingesetzte Profilstab eine ausreichende Biegesteifigkeit aufweisen.

Üblicherweise wird der Profilstab aus einem Rohr hergestellt, in das zur Bildung der Längsrinne ein entsprechend ausgebildetes Formwerkzeug eingedrückt wird, wobei die Tiefe der Längsrinne so bemessen ist, dass sie zumindest an ihrem Grund mit der gegenüberliegenden Wandung des Rohres eine Doppelwandung bildet. Im Querschnitt ist der Profilstab im Bereich der Längsrinne V- oder U-förmig ausgebildet. Zur Verdeutlichung sei auf die DE 196 53 959 C1 verwiesen, in der ein gattungsgemäßer Profilstab gezeigt und beschrieben ist.

Als sozusagen Problemzone haben sich in Lebensdauer-Tests die Übergangsbereiche zwischen der Längsrinne und den sich anschließenden rohrartigen Enden gezeigt, die eine typische Versagensstelle bilden.

Da der Profilstab keinen gleichmäßigen Querschnitt über seine gesamte Länge aufweist, befindet sich der Schubmittelpunkt des jeweiligen Querschnitts an verschiedenen Positionen. Im Bereich der Längsrinne liegt er, versetzt zur Längsachse, die durch die Mittelachse der Enden definiert ist, außerhalb des Profilstabes. In Richtung des jeweiligen Endes verläuft der Schubmittelpunkt zur Mittelachse hin.

Bei eine wechselseitigen Auslenkung der Verbundlenkerachse entsteht eine Torsionsbelastung, die über die Anbindung zu den Längslenkern in den Profilstab, d.h., den in diesem Fall Querträger, eingeleitet wird. Damit erfährt der Querträger bei Verschiebung des Schubmittelpunktes mit einem Abstand zur Wirkachse des Torsionsmomentes eine zusätzliche Biegung.

Bei dem bekannten Querträger stellt sich eine Gesamtgeometrie dar, bei der der Verlauf des Schubmittelpunktes gerade im genannten Übergangsbereich eine starke Steigung aufweist. Die Übertragung des Torsionsmomentes sowie des zusätzlichen Biegemomentes von dem sehr steifen rohrartigen Ende in den torsionsweichen, durch die Längsrinne definierten Mittelteil über einen kurzen Übergangsbereich, stellt sich in der Praxis als äußerst kritisch hinsichtlich der Lebensdauer dar.

Der Erfindung liegt die Aufgabe zugrunde, einen Profilstab der gattungsgemäßen Art so weiterzuentwickeln, dass seine Standzeit insbesondere bei wechselseitiger Auslenkung der Enden erhöht wird.

Diese Aufgabe wird durch einen Profilstab mit den Merkmalen des Anspruchs 1 gelöst.

Durch diese konstruktive Ausbildung des Profilstabes wird der Verlauf des Schubmittelpunktes optimiert, so dass insbesondere die Belastung im Bereich des Übergangs zwischen der Längsrinne und dem jeweiligen rohrartigen Ende gleichmäßig aufgenommen wird.

Dabei verschiebt sich der Schubmittelpunkt in diesem Bereich näher zur gedachten Längsachse hin, wodurch ein flacher, d.h. weicherer Verlauf erreicht wird.

In der Folge ergibt sich eine durchaus bemerkenswerte Erhöhung der Lebensdauer des Profilstabes, die sich, da es sich beispielsweise beim Einsatz als Querträger um ein sicherheitsrelevantes Bauteil handelt, als in dieser Beziehung besonders vorteilhaft darstellt.

Daneben ist die einfache und kostengünstige Realisierung der Erfindung hervorzuheben, da das Einbringen der Einprägung prinzipiell in einem Arbeitsgang mit der Formgebung des Profilstabes im übrigen erfolgen kann.

Zu einer Kostenreduzierung trägt auch bei, dass auf einen bislang üblichen Kugelstrahlprozess, mit dem die Dauerfestigkeit des Werkstoffes gesteigert werden soll, verzichtet werden kann.

Nach einer vorteilhaften Weiterbildung der Erfindung ist die Einprägung im auf die der Längsrinne abgewandten Seite projizierten Übergang zwischen der Längsrinne und dem rohrartigen Ende vorgesehen. Je nach Erfordernis können auch mehrere Einprägungen benachbart eingebracht sein, wobei sich diese ebenso wie eine einzelne Einprägung als Mulde darstellen, die sich in Längsachsrichtung des Profilstabes erstrecken.

Denkbar ist aber auch, die Einprägung lediglich als Delle auszubilden, die quer zur Längserstreckung des Profilstabes verläuft oder nach Art einer Kalotte ausgebildet ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

### Es zeigen:

- Figur 1: einen erfindungsgemäßen Profilstab in einer perspektivischen Ansicht
- Figur 2: einen Teilausschnitt des Profilstabes in einem Längsschnitt
- Figur 3: einen Teilausschnitt eines Profilstabes nach dem Stand der Technik, ebenfalls in einem Längsschnitt.

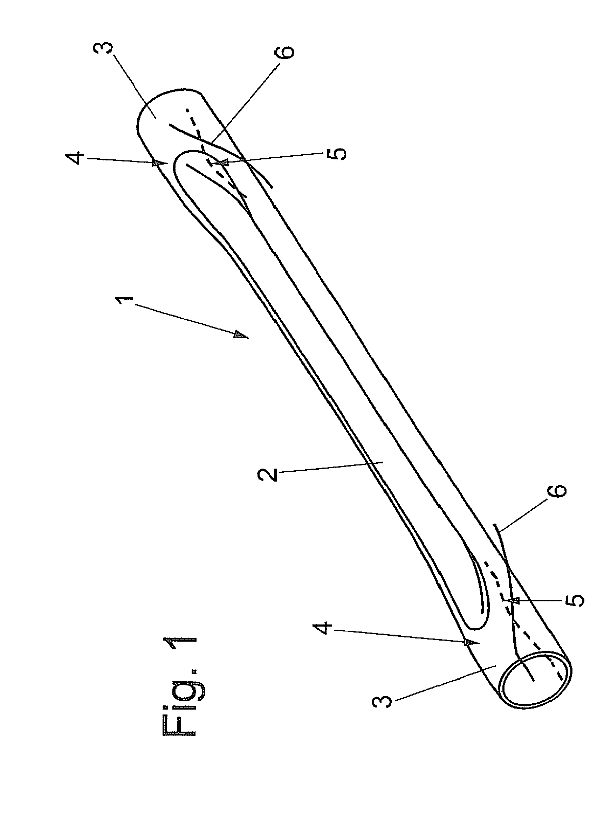

In der Figur 1 ist ein als Querträger einer Verbundlenkerachse eines Kraftfahrzeuges einsetzbarer Profilstab 1 gezeigt, der zwei rohrartige Enden 3 sowie eine dazwischen eingeformte doppelwandige Längsrinne 2 aufweist.

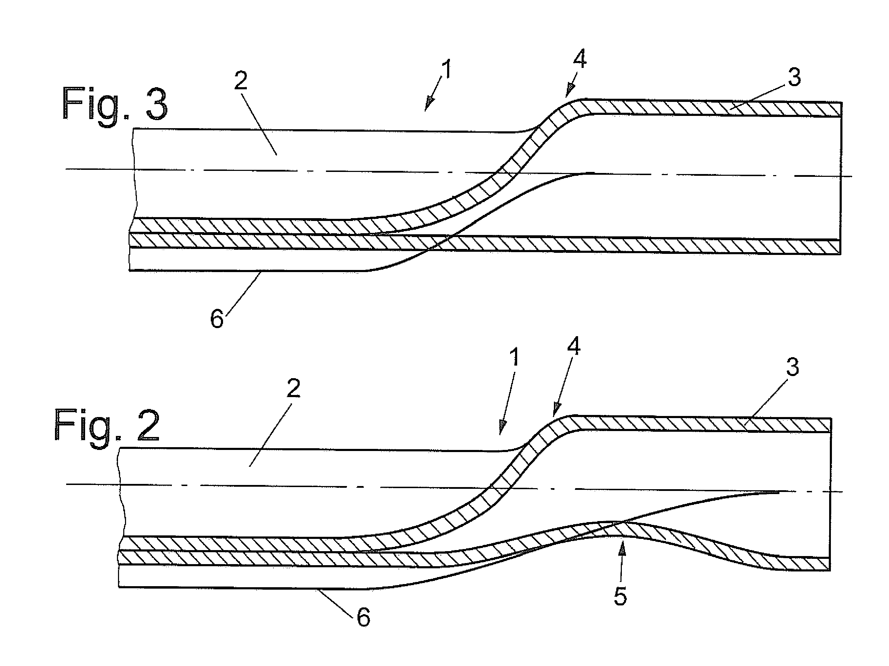

In der Figur 3 ist ein Teilausschnitt des Profilstabes 1 nach dem Stand der Technik dargestellt, bei dem die der Längsrinne 2 abgewandte Unterseite über die gesamte Länge gerade verläuft.

Mit dem Bezugszeichen 6 ist ein entsprechend einer Belastung des Profilstabes 1 und dessen Querschnittsform sich verändernder Verlauf des Schubmittelpunktes dargestellt.

In der Figur 3 ist zu erkennen, dass dieser Verlauf in einem Übergangsbereich 4 zwischen dem rohrartigen Ende 3 und der Längsrinne 2 relativ steil verläuft, was, wie beschrieben, zu erheblichen Nachteilen insbesondere hinsichtlich der Lebensdauer des Profilstabes 1 bzw. des Querträgers führt.

Erfindungsgemäß ist auf der der Längsrinne 2 abgewandten Seite, zumindest in einem Teilbereich der rohrartigen Enden 3, jeweils mindestens eine Einprägung 5 vorgesehen, wie dies in den Figuren 1 und 2 erkennbar ist. Im Beispiel erstreckt sich die dellenförmige Einprägung 5 ausgehend von dem rohrartigen Ende 3 bis in den Übergangsbereich 4 zur Längsrinne 2.

In den Figuren 1 und 2 ist der sich dadurch ergebende veränderte Verlauf 6 des Schubmittelpunktes dargestellt, wobei zu erkennen ist, dass dieser Verlauf 6, bei dem der Schubmittelpunkt im Bereich der Längsrinne 2 außerhalb des Profilstabes 1 liegt und im Bereich des rohrartigen Endes 3 auf der gedachten Mittellängsachse, im Übergangsbereich 4 relativ flach geneigt ausgebildet. Insoweit wird durch die Erfindung eine belastungsoptimierte Gestaltung des Profilstabes 1 möglich. Im übrigen kann durch die Kontur und Abmessung der Einprägung 5 der Verlauf des Schubmittelpunktes entsprechend den Erfordernissen beeinflusst werden.

## Patentansprüche

1. Als Querträger einer Verbundlenkerachse eines Kraftfahrzeuges einsetzbarer Profilstab (1) mit zwei rohrartigen Enden (3) und einer dazwischen eingeformten doppelwandigen Längsrinne (2), **dadurch gekennzeichnet, dass** auf der der Längsrinne (2) abgewandten Längsseite zumindest in einem Teilbereich der rohrartigen Enden (3) jeweils mindestens eine Einprägung (5) vorgesehen ist.

2. Profilstab nach Anspruch 1, **dadurch gekennzeichnet, dass** die Einprägung (5) sich bis in einen Übergangsbereich (4) zwischen dem rohrartigen Ende (3) und der Längsrinne (2) erstreckt.

3. Profilstab nach Anspruch 1 oder 2, **dadurch gekennzeichnet, dass** mehrere Einprägungen (5) vorgesehen sind, die in Längsrichtung des Profilstabes (1) hintereinander liegend angeordnet sind.

4. Profilstab nach einem der vorhergehenden Ansprüche, **dadurch gekennzeichnet, dass** die Einprägung (5) muldenförmig ausgebildet ist und sich in Längsachsrichtung des Profilstabes (1) erstreckt.

5. Profilstab nach einem der vorhergehenden Ansprüche, **dadurch gekennzeichnet, dass** die Einprägung (5) als Delle ausgebildet ist, die sich quer zur Längsachse erstreckt oder nach einer Art einer Kalotte ausgebildet ist.

6. Profilstab nach einem der vorhergehenden Ansprüche, **dadurch gekennzeichnet, dass** die Einprägung (5) beim Einformen der Längsrinne (2) mit eingebracht ist.
